# EUROPEAN PATENT APPLICATION

(11) **EP 4 838 722 A1**
(43) Date of publication of application: **11.11.2026**
(21) Application number: 25175274.7
(22) Date of filing: 09.05.2025
(51) Int. Cl.: H02B 3/00, H02B 11/12, H02B 11/167, H02B 11/127, H02B 11/28

(54) **A TEST APPARATUS FOR ELECTRICAL SWITCHGEARS**

(71) Applicant: ABB Schweiz AG, 5400 Baden (CH)
(72) Inventor: MAGNO, Giorgio, 24030 Brembate di Sopra (BG) (IT); MAGONI, Stefano, 24046 Osio Sotto (BG) (IT); GNATA, Enrico, 24123 Bergamo (IT)
(74) Representative: De Bortoli, Eros

(57) **Abstract**

A test apparatus for electrical switchgears, which comprises a truck assembly having a plurality of wheels that can slide on a motion plane along a motion axis and a support structure intended to be mounted on said truck assembly.

The above-mentioned support structure include a first support member structured to be mounted on the truck assembly, a second support member structured to be mounted on the first support member and a plurality of third support members structured to be mounted on the second support member.

The second support member is movable relative to the first support member, along a first axis perpendicular to the motion plane of the truck assembly, when the second support member is mounted on the first support member. More particularly, the second support member is movable, along the first axis, in a plurality of selectively adjustable positions relative to the first support member.

## Description

The present invention relates to the field of electrical switchgears for low voltage (LV) or medium voltage (MV) electrical systems. More particularly, the present invention relates to a test apparatus for electrical switchgears.

Electrical switchgears are widely used in electric power transmission and distribution systems. As is known, these electric systems are regularly subjected to on-the-field tests, which, for example, can consist of voltage detection at the primary contacts of the switchgear, electrical continuity tests, earthing tests, visual inspection of the primary contacts, and so on.

In order to carry out a certain test on an electrical switchgear, a dedicated test apparatus is placed in the compartment normally occupied by a switching unit (e.g. a circuit breaker, a disconnector, a contactor, and the like) of the withdrawable type.

Unfortunately, nowadays, it is necessary to have a wide range of test equipment available to carry out the variety of tests normally requested for electrical switchgears. As a matter of fact, it is necessary to use, from time to time, a different test apparatus depending on the kind of test to be performed and depending on the size (in particular the width and depth) of the switchgear compartment in which the test equipment must be placed.

It is evident how these circumstances entail higher costs for the management and maintenance of these electrical systems. Additionally, storage and transport on site of numerous pieces of test equipment are rather difficult and expensive to manage from a logistic point of view.

The main aim of the present invention is to provide a test apparatus for electrical switchgears, which allows overcoming or mitigating the above-described drawbacks of the state of the art. Within this aim, a further purpose of the present invention is to provide a test apparatus that can be easily adapted to the kind of the test to be performed and to the size of the switchgear compartment to be accessed for the execution of the desired test.

A further purpose of the present invention is to provide a test apparatus that can be easily managed from a logistical point of view and that can be easily installed on the field.

A further purpose of the present invention is to provide a test apparatus with a relatively simple structure, which is relatively simple and inexpensive to manufacture at industrial level.

The above aim and purposes, as well as other purposes that will emerge clearly from the following description and attached drawings, are provided, according to the invention, by a test apparatus for electrical switchgears, according to the following claim 1 and the related dependent claims.

In a general definition, the test apparatus, according to the invention, comprises a truck assembly having a plurality of wheels that can roll on a motion plane along a motion axis.

The test apparatus further comprises a support structure structured to be mounted on said truck assembly. Such a support structure includes a first support member structured to be mounted on the truck assembly, a second support member structured to be mounted on the first support member and one or more third support members structured to be mounted on the second support member.

The second support member is movable relative to said first support member, along a first axis perpendicular to the motion plane of the truck assembly, when the second support member is mounted on said first support member. Namely, said second support member is movable, along said first axis, in a plurality of selectively adjustable positions relative to said first support member.

Preferably, the above-mentioned one or more third support members comprises one or more third support members movable relative to said second support member, along a second axis perpendicular to the motion axis of the truck assembly and perpendicular to said first axis, when said third support members are mounted on said second support member. Each movable third support member is reversibly movable, along said second axis, in a plurality of selectively adjustable positions relative to said second support member.

Preferably, the above-mentioned one or more third support members comprises one or more fixed third support members structured to be mounted on said second support member in corresponding one or more fixed positions, along said second axis.

The test apparatus, according to the invention, comprises one or more test probes structured to be mounted on the one or more third support members of said support structure.

Preferably, the test apparatus, according to the invention, comprises at least three test probes. Preferably, the test apparatus, according to the invention, comprises multiple sets of test probes structured to be mounted on the third support members. Each set of test probes is designed to carry out a corresponding type of test on the switchgear and it is advantageously interchangeable with another set of test probes.

Preferably, the above-mentioned multiple sets of probes include two or more among: a first set of test probes for grounding the primary contacts of a switchgear, a second set of test probes for injecting a current through the primary contacts of a switchgear, a third set of test probes for detecting a voltage at the primary contacts of a switchgear and a fourth set of test probes for visual inspection of the primary contacts of a switchgear.

According to some embodiments of the invention, the above-mentioned truck assembly comprises comprising a first truck unit and a second truck unit mechanically coupled one to another to form a single body.

The first truck unit is structured to engage a fixed support structure of a switchgear, when the test apparatus is employed on a switchgear.

The second truck unit comprises a plurality of wheels and is reversibly movable relative to the first truck unit on the motion plane and the said motion axis of said truck assembly, when the test apparatus is employed on a switchgear. Advantageously, the second truck unit is structured to carry the above-mentioned support structure and test probes.

Preferably, the truck assembly comprises driving means for moving the second truck unit relative to the first truck unit. Advantageously, said driving means comprising at least an electric motor.

Preferably, the first truck unit comprises a first intermediate member and a pair of first side members mechanically coupled to the first intermediate member to form a single body. The first side members are arranged at opposite positions relative to the first intermediate member, along a third axis parallel to the motion plane and perpendicular to the motion axis of the truck assembly. Each first side member is reversibly movable, along said third axis, into a plurality of selectively adjustable positions relative to the first intermediate member.

Preferably, the second truck unit comprises a second intermediate member and a pair of second side members mechanically coupled to the second intermediate member to form a single body. The second side members are arranged at opposite positions relative to the second intermediate member, along a fourth axis parallel to the motion plane and perpendicular to the motion axis of the truck assembly. Each second side member is reversibly movable, along said fourth axis, into a plurality of selectively adjustable positions relative to the second intermediate member. Preferably, the second truck unit comprises an actuating member for actuating a corresponding shutter of a switchgear, which is mounted on a corresponding second side member of said second truck unit.

Preferably, the test apparatus comprises a control unit mounted on the first support member of the above-mentioned support structure. Such a control unit can be operatively coupled to the test probes and, possibly, to the electric motor of said driving means.

According to alternative embodiments, however, the above-mentioned control unit can be a stand-alone device electrically connected to other components of the test apparatus.

Further characteristics and advantages of the invention will emerge from the description of preferred, but not exclusive, embodiments of the switchgear apparatus, according to the invention, non-limiting examples of which are provided in the attached drawings, wherein:
- Figures 1-2 show schematic views of the test apparatus, according to the invention, when mounted on a medium voltage switchgear;
- Figures 3-4 show schematic partial views of the test apparatus, according to the invention;
- Figures 5-9 show schematic views of a support structure included in the test apparatus, according to the invention;
- Figures 10-13 show schematic views of interchangeable test probes included in the test apparatus, according to the invention;
- Figures 14-16 show schematic views of a truck assembly included in the test apparatus, according to some embodiments of the invention;
- Figure 17 shows a portion of a truck assembly included in the test apparatus, according to a further embodiment of the invention.

Referring to the cited figures, the present invention relates to a test apparatus 1 for an electrical switchgear 100 that can operate at low-voltage or medium-voltage levels.

For the purposes of the present invention, the term "low voltage" (LV) relates to operating voltages lower than 1 kV AC and 1.5 kV DC whereas the term "medium voltage" (MV) relates to higher operating voltages up to some tens of kV, e.g. 70 kV AC and 100 kV DC.

The test apparatus 1, according to the invention, is particularly adapted for use in medium voltage switchgears and it will be described with particular reference to this specific application for the sake of simplicity. This choice, however, does not intend to limit the scope of the present invention in any way. The test apparatus 1, according to the invention, may be used with simple adaptations also in switchgears of different type.

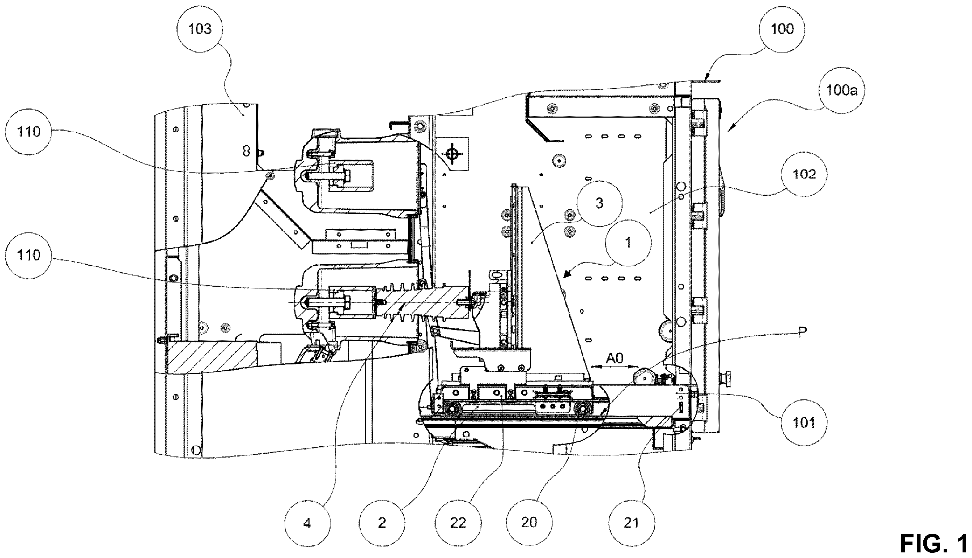

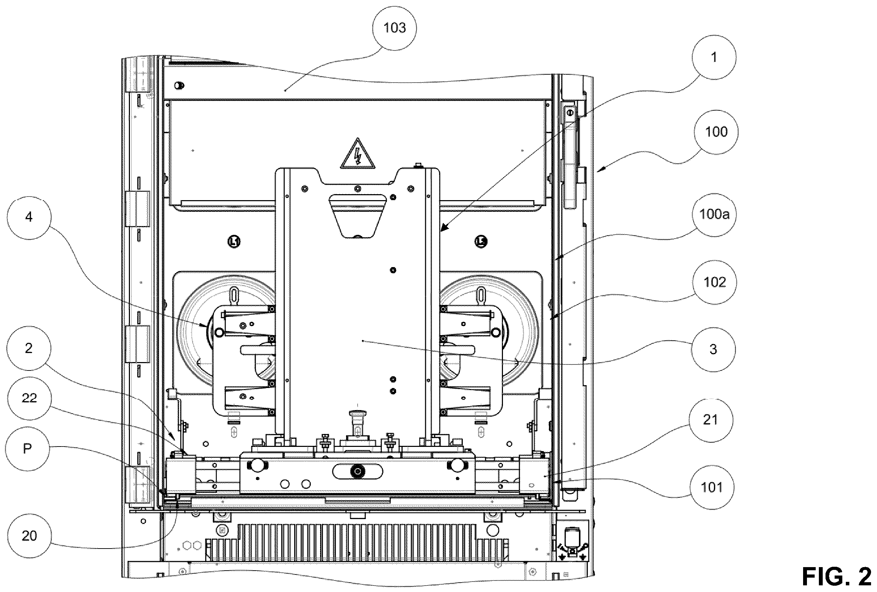

Figures 1-2 show a switchgear 100 for medium voltage applications.

The switchgear 100 comprises a cabinet 103 (partially shown in figures 1-2) that is internally divided into several compartments accommodating various electrical equipment.

At a compartment 102 of the cabinet, the switchgear 100 normally comprises a withdrawable switching unit (not shown), e.g., a circuit breaker, a disconnector, a contactor, and so on.

The test apparatus 1, according to the invention, is used when some tests must be carried out on the switchgear. In this case, the switching unit is fully extracted from the compartment 102, in which it is normally positioned, and it is replaced by the test apparatus 1 (figures 1-2).

In general, the switchgear 100 and the components thereof (including the above-mentioned switching unit) may be realized according to solutions of known type that are here not described for the sake of brevity.

According to the invention, the test apparatus 1 comprises a truck assembly 2 comprising a plurality of wheels that can roll on a motion plane P along a motion axis A₀.

Referring to figure 1, when the test apparatus is employed on a switchgear, the motion plane P of the truck assembly 2 is preferably formed by a base wall of the compartment 102, in which the test apparatus is placed. The motion axis A₀ is parallel to the motion plane P and is preferably perpendicular to a front side 100a of the switchgear 100. Advantageously, the motion axis A₀ is directed along the depth of the switchgear compartment 102 (reference is made to a normal installation position of the switchgear as shown in figures 1-2).

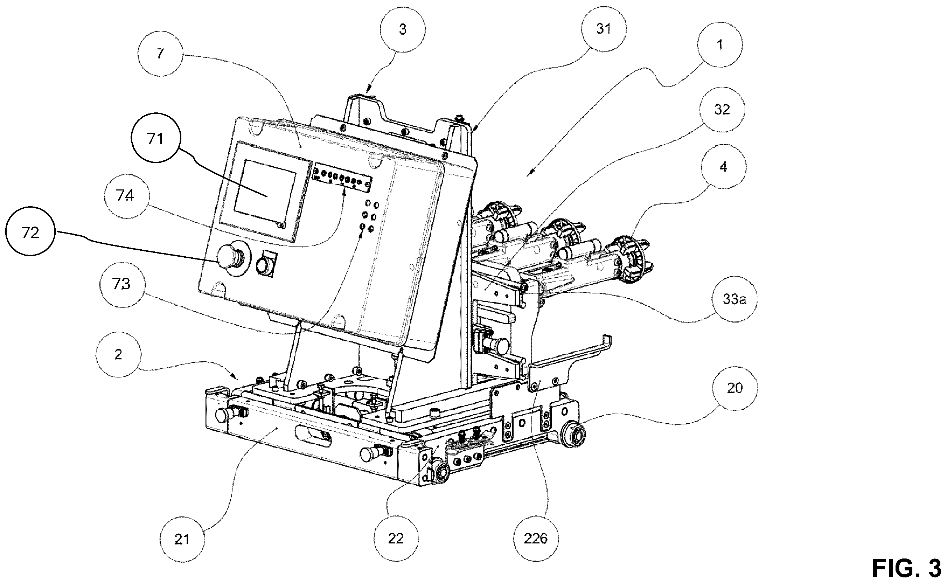

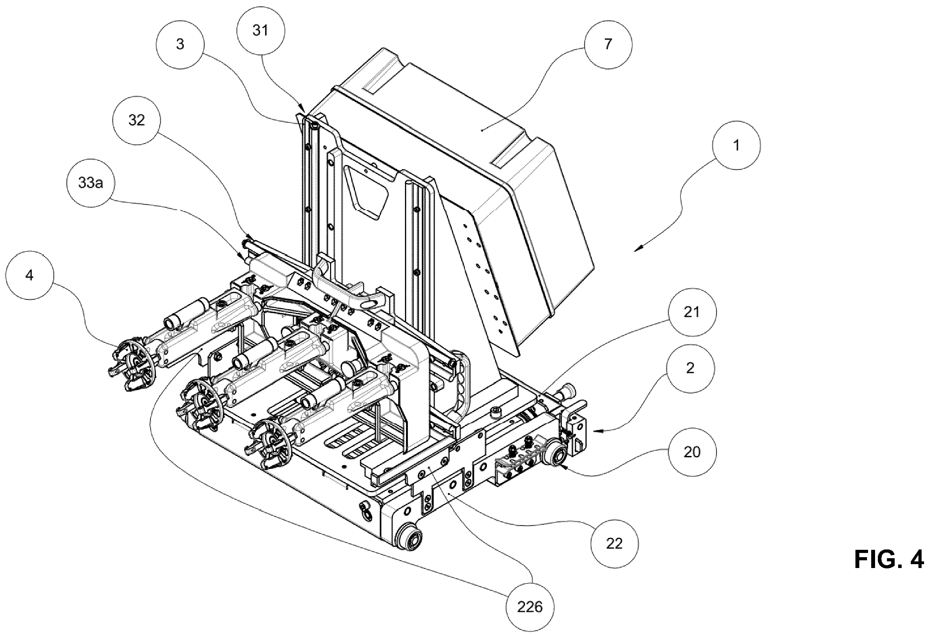

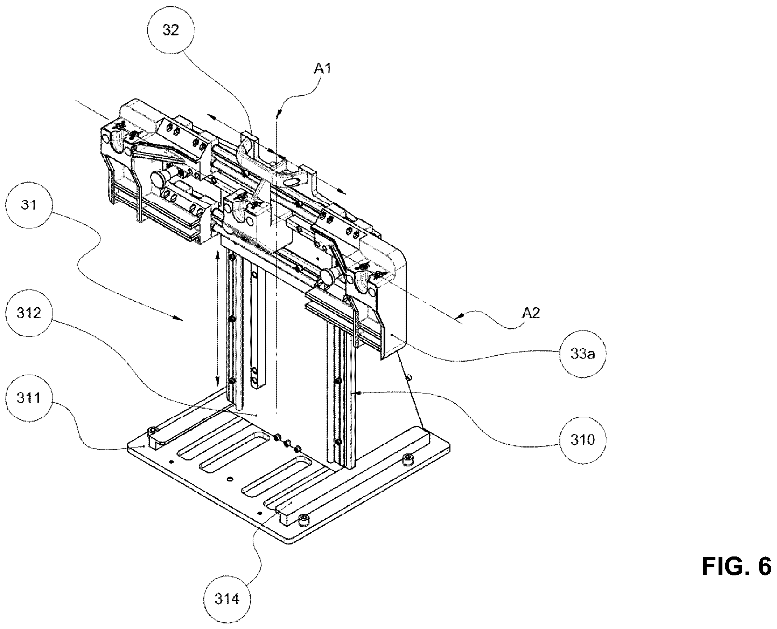

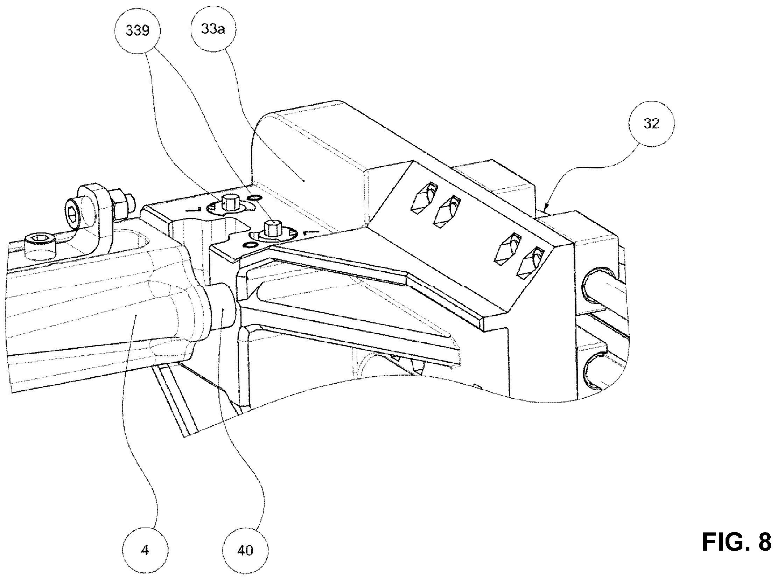

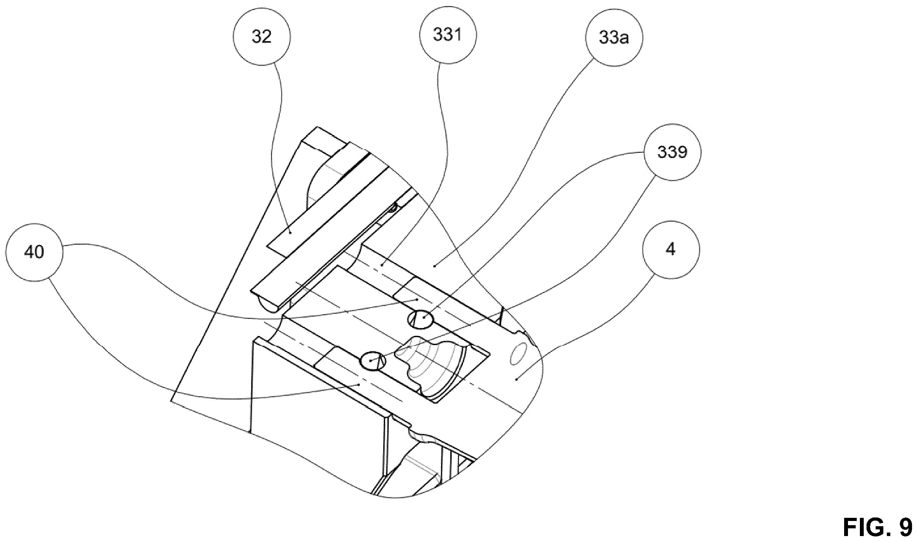

Referring now also to figures 3-9, according to the invention, the test apparatus 1 comprises a support structure 3 mounted on the truck assembly 2 in such a way to be carried by this latter. The support structure 3 includes a first support member 31 mounted, in a removable manner, on the truck assembly 2.

Preferably, the support member 31 comprises a base portion 311 that can be secured to the truck assembly 2 through suitable screws or similar removable mechanical connection means. Preferably, the support member 31 comprises an upright portion 312 mounted, in a removable manner, on the base portion 311 and mainly extending perpendicularly to this latter. Advantageously, as shown in figures 1-2, the first support member 31 is mounted at a side of the truck assembly 2, which is in distal position (along the motion axis A₀) from the bottom of the switchgear compartment 102 where the test apparatus is placed, when employed on a switchgear.

Preferably, the base portion 311 has one or more rails 314, in which one or more guiding elements 313 of the upright portion 312 can be slidingly inserted, so that the upright portion 312 can slide relative to the base portion 311 when it is mounted on this latter.

Preferably, the first support member 31 comprises a blocking mechanism 315 for blocking the upright portion 312 in a predefined position relative to the base portion 311.

The blocking mechanism 315, which can be realized according to solutions of known type, for example according to a snap-fit arrangement, can be manually operated when mounting or removing the upright portion 312 on or from the base portion 311.

In the embodiments shown in the cited figures, the first support member 31 is made of a structurally robust material, for example stainless-steel.

The base portion 311 is formed by a shaped plate extending in parallel to the motion plane P of the truck assembly.

The upright portion 312 is formed by a body including a main wall 312a extending perpendicularly to the base portion 31 and a pair of opposite parallel side walls 312b perpendicular to the above-mentioned main wall 312a and to the base portion 311.

The walls 312a, 312b are relatively positioned one to another so that the main wall 312a faces the bottom of the switchgear compartment 102 where the test apparatus is placed, when employed on a switchgear.

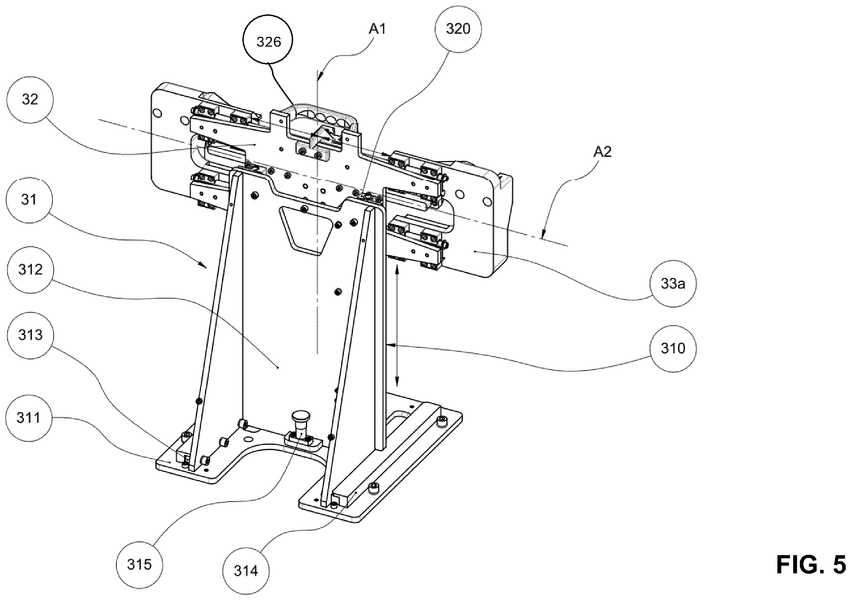

The main wall 312a has a rectangular o squared shape while above-mentioned side walls 312b are shaped as right triangles having their longer and shorter cathetus sides lying on the main wall 312a and on the base portion 311, respectively (figures 5-6).

As the skilled person can easily understand, however, the first support member 31 can be structured differently and include different materials with respect to the embodiments shown in the cited figures while being realized in accordance with the invention.

The support structure 3 includes a second support member 32 mounted in a removable manner on the first support member 31, namely on the main wall 312a of the upright portion 312. Advantageously, the second support member 32 is mounted at a side of the first support member 31, which faces the bottom of the switchgear compartment 102 where the test apparatus is placed, when employed on a switchgear.

Preferably, when it is mounted in its operating position, the second support member 32, can move relative to the first support member 31, along a first axis A₁ perpendicular to the motion plane P of the truck assembly (and perpendicular to the motion axis A₀).

Preferably, the second support member 32 has one or more guiding elements 320 that are slidingly inserted on one or more rails 310 of first support member 31, which are realized on the main wall 312a of the upright portion 312 and are oriented in parallel to the first axis A₁. In this way, when it is mounted on the first support member 31, the second support member 32 is movable relative to this latter, along a vertical direction relative to the motion plane P. Advantageously, the second support member 32 is reversibly movable, along the first axis A₁, in a plurality of selectively adjustable positions relative to the first support member 31, namely relative to main wall 312a of the upright portion 312.

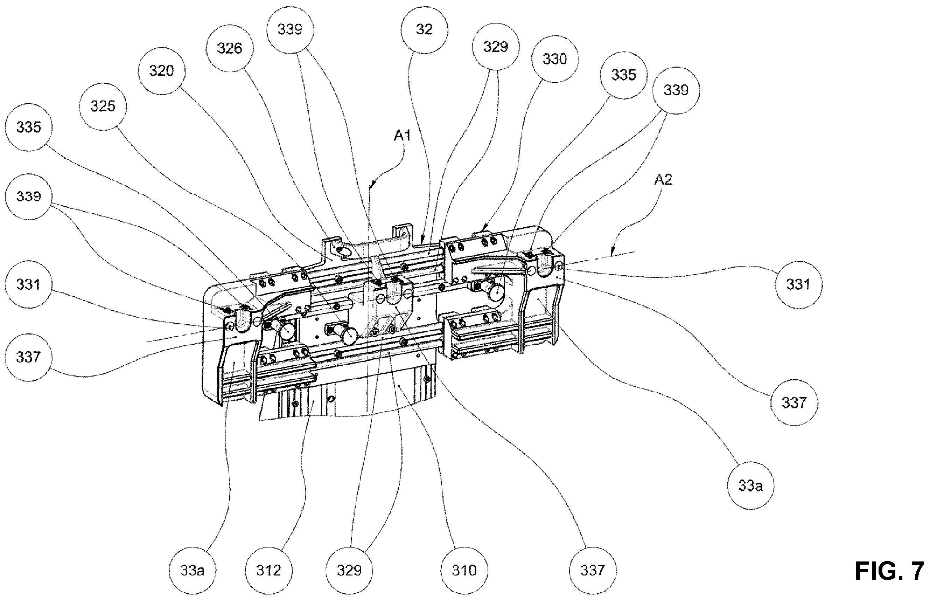

Referring to figure 7, the second support member 32 preferably comprises a first locking mechanism 325 reversibly actuatable between an unlocking condition, at which it allows the second support member to move relative to the first support member 31, along the first axis A₁, and a locking condition, at which it prevents the second support member to move relative to the first support member.

The locking mechanism 325 allows fixing the second support member 32 in a selected position relative to the first support member 31, along the first axis A₁.

The locking mechanism 325, which can be realized according to solutions of known type, for example according to a snap-fit arrangement, can be manually operated when mounting or removing the second support member 32 on or from the first support member 31 or when it is necessary to adjust the position of the second support member 32 relative to the first support member 31.

Preferably, the second support member 32 includes a handle 326 that can be manually grasped to move the second support member 32 relative to the first support member 31. **In** order to adjust the position of the second support member 32, a user can grasp the handle 326 with one hand and operate the locking mechanism 325 from a locking condition to an unlocking condition with the other hand. The user can then move the second support member 32 relative to the first support member 31 until the desired position for the support member 32 is reached. **In** the embodiments shown in the cited figures, the second support member 32 is formed by a H-shaped plate of aluminium extending perpendicularly to the motion plane P and to the motion axis A₀ of the truck assembly 2.

As the skilled person can easily understand, however, the second support member 32 can be structured differently and include different materials with respect to the embodiments shown in the cited figures while being realized in accordance with the invention.

The support structure 3 includes one or more third support members 33a, 33b mounted, in a removable manner, on the second support member 32.

Advantageously, the third support members 33a, 33b are mounted at a side of the second support member 32, which faces the bottom of the switchgear compartment 102 where the test apparatus is placed, when employed on a switchgear.

Each third support member 33 is made of a structurally robust material, for example aluminium or a plastic material reinforced with glass-fibre.

Preferably, when they are mounted in their operating positions, the third support members comprise one or more movable third support members 33a, which can move relative to the second support member 32, along a second axis A₂ perpendicular to the first axis A₁ and to the motion axis A₀ of the truck assembly.

Preferably, each movable third support member 33a has one or more guiding elements 330 that are slidingly inserted on one or more rails 329 of second support member 32. Advantageously, each movable third support member 33a is reversibly movable, along the second axis A₂, in a plurality of selectively adjustable positions relative to the second support member 32.

Preferably, each movable third support member 33a comprises a second locking mechanism 335 reversibly actuatable between an unlocking condition, at which it allows the corresponding third support member 33a to move relative to the second support member 32, along the second axis A₁, and a locking condition, at which it prevents the corresponding third support member to move relative to the second support member.

Each locking mechanism 335 allows fixing the corresponding third support member 33a in a selected position relative to the second support member 31, along the second axis A₂.

Each locking mechanism 325, which can be realized according to solutions of known type, for example according to a snap-fit arrangement, can be manually operated when mounting or removing the corresponding third support member 33a on or from the second support member 32 or when it is necessary to adjust the position of the corresponding third support member 33a relative to the second support member 32, along the second axis A₂.

**In** order to adjust the position of a movable third support member 33a, a user can grasp it with one hand and operate the locking mechanism 335 from a locking condition to an unlocking condition with the other hand. The user can then move the third support member 33a relative to the second support member 32 until the desired position for said support member is reached. Preferably, the third support members comprise one or more fixed third support members 33b, each mounted on the second support member 32 in a fixed position, conveniently along the second axis A₂.

**In** the embodiments shown in the cited figures, the third support members comprises a single fixed support member 33b and a pair of movable third support members 33a mounted on the second support member 32 at opposite positions relative to the fixed third support member, along the second axis A₂.

Each movable third support member 33a is formed by an overturned U-shaped block of material stainless-steel while the fixed support member 33b is formed by a shelf-shaped block of material.

Each third support member 33a, 33b includes a reinforced portion 337 at which a further component (test probe) of the test apparatus can be mechanically coupled.

In the embodiments shown in the cited figures, the support structure 3 comprises a pair of movable support members 33a arranged in opposite positions along the second axis A2 and a single fixed support member 33b arranged in an intermediate position between the movable support members 33a.

As the skilled person can easily understand, however, the third support members 33a, 33b can be structured and arranged differently and include different materials with respect to the embodiments shown in the cited figures while being realized in accordance with the invention. The arrangement of a configurable support structure 3 as described above, which can be mounted on a truck assembly 2, provides relevant advantages.

The support structure 3 has a fully modular structure and it can be easily mounted or disassembled manually by suitably operating the blocking mechanism 315 and the locking mechanisms 325, 335.

Since the second support member 32 can move relative to the first support member 31, along the first axis A₁, the position of the third support members 33a, 33b relative to the motion plane P of the truck assembly (in practice the height of the third support members 33a, 33b) can be adjusted according to the physical characteristics of the switchgear and to the type of test to be carried out.

Additionally, since each movable third support member 33a can move relative to the second support member 32, along the second axis A₂, the relative position (pitch) between each pair of third support members can be adjusted according to the physical characteristics of the switchgear and to the type of test to be carried out.

According to the invention, the test apparatus 1 comprises a plurality of test probes 4, each of which can be mounted, in a removable manner, on a corresponding third support members 33. Each test probe 4 has an elongated body extending along a main longitudinal axis A₅.

When installed in its operating position (i.e., mounted on the corresponding support member 33a, 33b), each test probe 4 is oriented along a direction perpendicular to the corresponding support member (i.e., substantially parallel to the motion axis A₀ of the truck assembly 2).

In practice, when the test apparatus is employed on a switchgear, the test probes 4 are directed towards the bottom of the switchgear compartment 102 where the test apparatus is placed.

Preferably, each test probe 4 comprises one or more supporting legs 40 that can be inserted in one or more seats 331 of a corresponding third support member 33a, 33b (namely of the reinforced portion 337 of this latter). Each test probe 4 can be secured to the corresponding third support member 33a, 33b through suitable screws 339 or similar removable mechanical connection means.

As the probes 4 are mounted on the support structure 3, which is in turn mounted on the truck assembly, their position can be easily adapted (along three dimensions) to the structural characteristics of the switchgear on which the test apparatus is employed.

As an example, their position can be easily adapted to the position of the primary contacts 110 of the switchgear to be tested during a test session (figures 1-2).

The test probes 4 are necessary to access to internal components of the switchgear (for example the primary contacts 110) and carry out the requested tests on these latter.

The test probes 4 can be of various type according to the tests to be carried out. For example, they can include conductive components intended to be operatively coupled with the primary contacts of the switchgear, electronic or sensing arrangements configured to detect physical quantities, electronic devices configured to provide images of internal components of the switchgear, and the like.

In the embodiments shown in the cited figures, the test apparatus 1 comprises three probes of a same type, which are mounted on the support structure 3. As the skilled person can easily understand, however, the test apparatus may include a different number of test probes. Preferably, the test apparatus 1 comprises multiple sets of test probes 41, 42, 43, 44 structured to be mounted on the third support members 33a, 33b.

Each set of test probes is interchangeable with another set of test probes. In this way, the test apparatus 1 is able to carry out different tests on the internal components of the switchgear by simple changing the type of test probes mounted on the third support members 33a, 33b. Preferably, each set of test probes 41, 42, 43, 44 comprises at least three probes of a same type. Preferably, the test probes of the test apparatus include two or more among:
- a first set of test probes 41 for grounding the primary contacts 110 of a switchgear;
- a second set of test probes 42 for injecting a current through the primary contacts 110 of a switchgear;
- a third set of test probes 43 for detecting a voltage at the primary contacts 110 of a switchgear;
- a fourth set of test probes 44 for visual inspection of the primary contacts 110 of a switchgear.

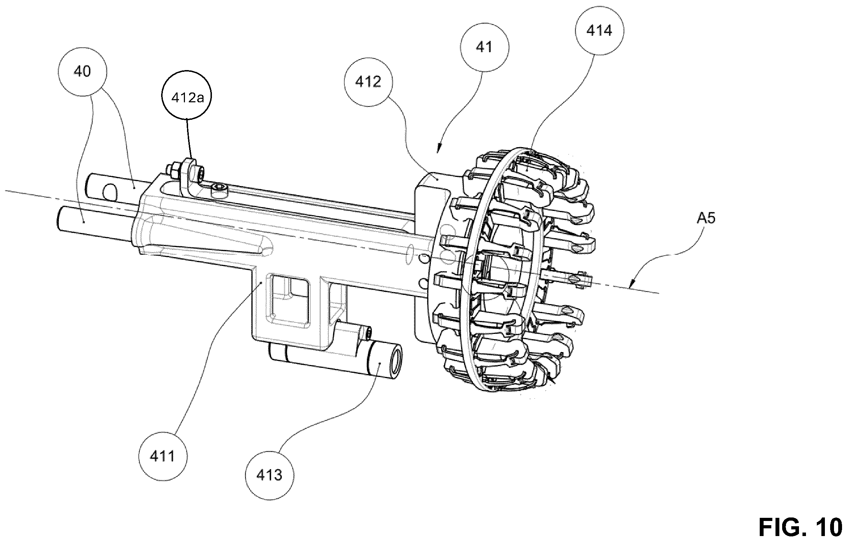

Figure 10 shows a test probe 41 for safety grounding the primary contacts 110 of a switchgear. The test probe 41 has an elongated body that extends along a main longitudinal axis A₅. When the test probe 41 is mounted on the support structure 3, the main longitudinal axis As is parallel to the motion axis A₀ of the truck assembly.

The test probe 41 comprises a support structure 411 made of electrically insulating material, which has a pair of legs 40 oriented in parallel to the main longitudinal axis of the test probe. The insulating legs 40 are arranged for mounting the test probe on a corresponding support member 33a, 33b. The supporting structure 411 supports a conductive connector 412 provided with a tulip electric contact 414 arranged in an opposite position relative to the legs 40. The tulip contact 414 is intended to be coupled to a primary contact 110 of the switchgear, during a test session.

When the test probe 41 is installed in its operating position (i.e., it is mounted on the corresponding support member 33a, 33b with the truck assembly 2 is in service position), the conductive connector 412 is electrically connected to an earthing circuit (not shown) of the test apparatus at a contact point 412a.

The test probe 41 may also be equipped with a camera 413 to inspect the primary contacts 110 of the switchgear during the execution of a grounding test. The camera 413 can communicate with a control unit of the test apparatus in a wireless or wired manner.

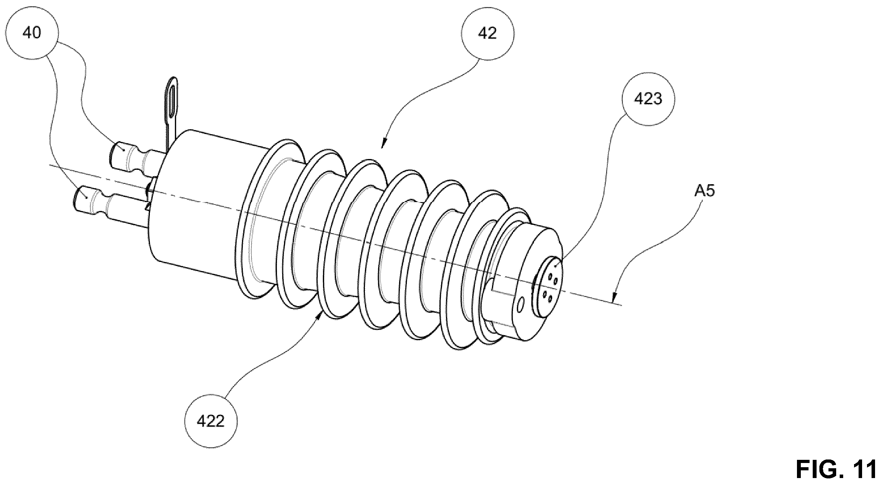

Figure 11 shows a test probe 42 for detecting a voltage at the primary contacts 110 of a switchgear. A test probe of this type can be conveniently used to carry out voltage measurements at the primary contacts 110 of the switchgear.

The test probe 42 comprises an elongated conductive member 421 extending along the main longitudinal axis A₅ of the test probe. When the test probe 42 is mounted on the support structure 3 the main longitudinal axis A₅ is parallel to the motion axis A₀ of the truck assembly. The conductive member is coaxially surrounded by a bushing insulator 422.

The test probe 42 comprises a pair of insulating protruding legs 40 protruding from the bushing insulator 422 in parallel to the main longitudinal axis A₅. The insulating legs 40 are arranged for mounting the test probe on a corresponding support member 33a, 33b.

In an opposite position relative to the insulating legs 40, the above-mentioned conductive member has a contact head 423 protruding from the insulator 422. The contact head 423 is intended to be coupled to a primary contact 110 of the switchgear, during a test session.

In the bushing insulator 422, a voltage sensor (not shown), for example of capacitive type, is arranged in such a way to be operatively coupled to the contact head 423. Such a voltage sensor can communicate with a control unit of the test apparatus in a wired or wireless mode.

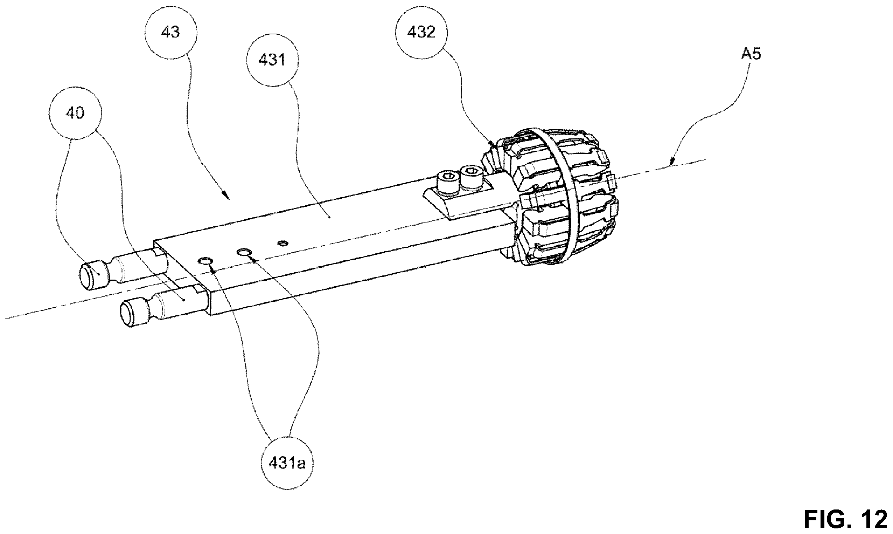

Figure 12 shows a test probe 43 for injecting a current through the primary contacts 110 of a switchgear. A test probe of this type can be conveniently used to test the electrical continuity of internal components or connections of the switchgear.

The test probe 43 comprises an elongated conductive member 431 extending along the main longitudinal axis A₅ of the test probe. When the test probe 43 is mounted on the support structure 3 the main longitudinal axis A₅ is parallel to the motion axis A₀ of the truck assembly. The test probe 43 further comprises a pair of insulating protruding legs 40 solidly coupled to the elongated conductive member 431 and oriented in parallel to the main longitudinal axis A₅. The insulating legs 40 are arranged for mounting the test probe on a corresponding support member 33a, 33b.

In an opposite position relative to the insulating legs 40, the conductive member 431 is provided with a with a tulip electric contact 432. The tulip electric contact 432 is intended to be coupled to a primary contact 110 of the switchgear, during a test session.

When the test probe 43 is installed in its operating position (i.e., it is mounted on the corresponding support member 33a, 33b with the truck assembly 2 in service position), the conductive connector 431 is electrically connected with a control unit of the test apparatus at the connection seats 433. In this way, a test current can be injected through the conductive connector 431.

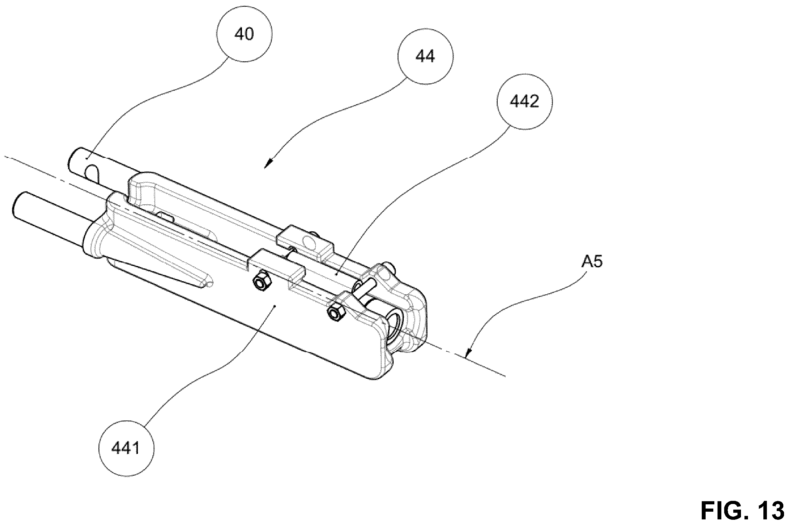

Figure 13 shows a test probe 44 for visually inspecting the electric contacts 110 of a switchgear. The test probe 44 has an elongated body mainly extending along the main longitudinal axis A₅. The test probe 44 comprises a support structure 441 made of electrically insulating material, which has a pair of legs 40 oriented in parallel to the main longitudinal axis A₅. When the test probe 44 is mounted on the support structure 3 the main longitudinal axis A₅ is parallel to the motion axis A₀ of the truck assembly.

The insulating legs 40 are arranged for mounting the test probe on a corresponding support member 33a, 33b.

The supporting structure 441 supports a camera 442 placed in an opposite position relative to the insulating legs 40.

During a test session, when the truck assembly 2 is in a service position, the camera 442 is placed in proximity of the primary contacts 110 of the switchgear to acquire images of these latter. The camera 442 can communicate with a control unit of the test apparatus in a wireless or wired manner. In some cases, the camera 442 can communicate also with another compatible computerized device (for example a smartphone), when necessary.

As mentioned above, the test apparatus 1 comprises a truck assembly 2 comprising a plurality of wheels that can roll on a motion plane P along a motion axis A₀.

In principle, the truck assembly 2 can be arranged according to solutions of known type, which are here not described in detail for the sake of brevity.

According to preferred embodiments of the invention, however, the truck assembly 2 is structured in such a way to be able to adapt its width to the width of the compartment 102 of the switchgear where the test apparatus is placed (reference is made to a normal installation position of the test apparatus on a switchgear as shown in figures 1-2).

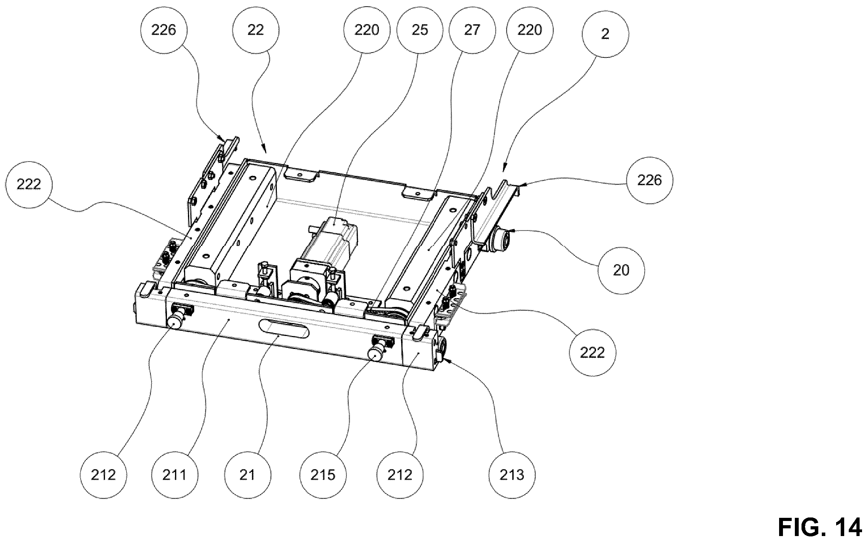

Referring now also to figures 14-17, according to some embodiments of the invention, the truck assembly 1 comprises a first truck unit 21 and a second truck unit 22, which, in general terms, are mechanically coupled one to another (to form a single structure) and can move one relative to another along the above-mentioned motion axis A₀.

The first truck unit 21 is structured to engage a fixed support 101 of the switchgear 100 (for example the lateral walls of the switchgear compartment 102 in which test apparatus is placed), when the test apparatus is employed thereon. In this way, the first truck unit 21 can form a fixed steady support for the second truck unit 22 that can move relative to it (figure 1).

The second truck unit 22 is structured to carry the supporting structure 3 and the test probes 4 of the test apparatus and it is equipped with wheels 20 in such a way that it can be moved, along a motion plane P, relative to the first truck unit 21 (in fixed position when the test apparatus is employed on a switchgear). In practice, the second truck unit 21 forms a movable base for the supporting structure 3 and the test probes 4.

When the test apparatus is employed on a switchgear, the second truck unit 22 can reversibly move relative to the first truck unit 21, along the motion axis A₀, between a first truck position, at which the second truck unit is in contact with the first truck unit, and an adjustable second truck position, at which the second truck unit 22 is spaced apart from the first truck unit.

The position of the support structure 3 and the test probes 4 relative to the primary contacts 110 of the switchgear can therefore be adjusted (based on the kind of test to be carried out) along the depth (motion axis A₀) of the switchgear compartment 102 where the test apparatus is placed.

Preferably, the truck assembly 2 comprises first driving means 25, 26, 27 for moving the second truck unit 22 relative to the first truck unit 21, when the truck assembly is installed on the switchgear.

Preferably, the above-mentioned driving means comprises at least an electric motor 25. Preferably, the electric motor 25 is mounted on the second truck unit 22.

Preferably, the electric motor 25 is capable of controlling selectively an angular position of an actuation shaft during the rotation.

Preferably, the electric motor 25 is a stepper electric motor. In this case, it incorporates *per se* control means capable of controlling selectively the angular position of the actuation shaft 10a during the rotation.

As an alternative, the electric motor 25 can be an electric motor (for example a brushless electric motor or a DC electric motor) equipped with an encoder. In this case, the electric motor 25 conveniently includes an electronic control circuit operatively associated to the encoder and configured to process the detection information provided by the encoder to control selectively the angular position of the actuation shaft 10a during the rotation.

Preferably, the above-mentioned driving means comprise one or more first actuation rods 26 mechanically coupling the first and second truck units 21, 22 and one or more first motion transmission mechanisms 27 mechanically coupling the electric motor 25 with the actuation rods 26.

In the embodiments shown in the cited figures, the truck assembly 2 can comprise a pair of first actuation rods 27 formed by parallel worm screws. The worm screws 26 join the first truck unit 21 and the second truck unit 22 at opposite sides of the electric motor 25.

The truck assembly can further comprise a pair of first motion transmission mechanisms 27, each formed by a belt mechanism mechanically coupling the actuation shaft of the electric motor 25 with a corresponding worm screw 27. The motion transmission mechanisms 27 are also mounted on the second truck unit 22.

Preferably, the first truck unit 2 comprises a first intermediate member 211 and a pair of first side members 212 mechanically coupled one to another to form a single structure.

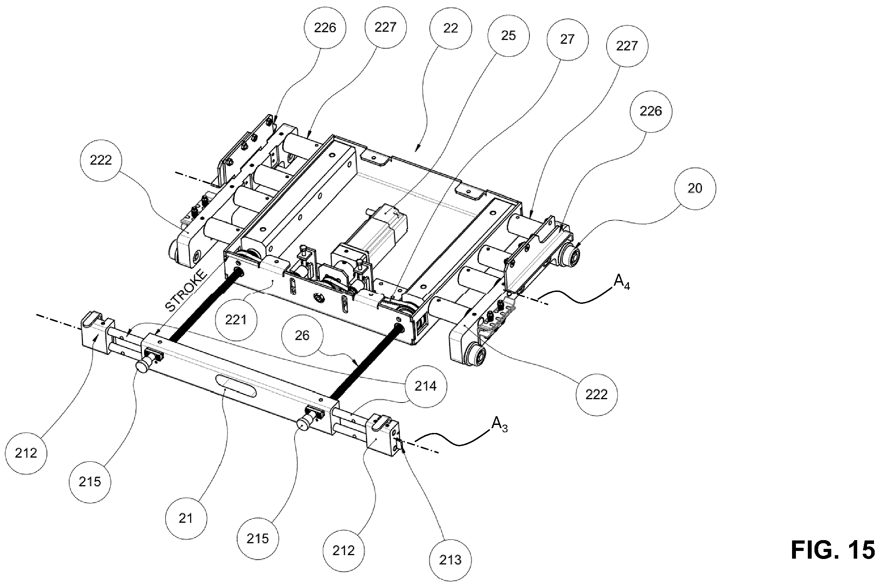

The first side members 212 are arranged at opposite positions relative to the first intermediate member 211, along a third axis A₃ perpendicular to the motion axis A₀ and parallel to the motion plane P of the second truck unit 22 (figure 15).

According to the embodiments shown in the cited figures, the first truck unit 21 has a solid profiled structure extending along the third axis A₃. Such a profiled structure includes an elongated intermediate part forming the first intermediate member 211 and a pair of opposite shorter side parts forming the first side members 212.

The first truck unit 21 comprises, for each first side member 212, one or more coupling rods 214 mechanically coupling the corresponding first side member 212 to the first intermediate member 211. Each coupling rod 214 is fixed to a corresponding first side member 212 and can slide relative to the first intermediate member 211.

The first coupling rods 214 allow the first intermediate member 211 of the first truck unit 21 to support the opposite first side members 212 and, at the same time, allow the movement of the first side members 212 relative to the first intermediate member 211.

Each first side member 212 is reversibly movable relative to the first intermediate member 211, along the third axis A₃, in a plurality of positions that can be selectively adjusted by an operator. In general terms, each first side member 212 is reversibly movable relative to the first support member 211 between a first position, at which it is in contact with the first intermediate member 211, and a selectively adjustable second position, at which it is spaced apart from the first intermediate member 211.

Preferably, the first truck unit 21 comprises, for each first side member 212, a locking mechanism 215 capable of mechanically interacting with a corresponding coupling rod 214 to allow a selective adjustment of the position of the corresponding first side member 212 relative to the first intermediate member 211.

Each first locking mechanism 215 is reversibly actuatable between an unlocking condition, at which it allows the corresponding first side member 212 to move relative to the first intermediate member 211, and a locking condition, at which it prevents the corresponding first side member 212 to move relative to the first intermediate member 211.

Each locking mechanism 215 can be manually operated by a user when the truck assembly is installed on the switchgear or removed from this latter. In fact, each locking mechanism 215 allows to move the corresponding first side member 212 in a plurality of positions relative to the first intermediate member 211.

In order to select a position of a first side member 212 relative to the first intermediate member 212, an operator can operate the locking mechanism 215 from the locking condition to the unlocking locking condition and move the first side member 212 relative to the first intermediate member 211 until it is reached the desired position for said first side member. In this way, the width of the first truck unit 21 can be adapted to the width of the switchgear compartment 102 in which the truck assembly is placed.

Each locking mechanism 215 can be realized according to various solutions, for example according to a snap-fit arrangement.

Preferably, each first side member 212 of the first truck unit 21 includes an engaging mechanism 213 that can be actuated by an operator to engage or disengage the first side member 212 with or from a fixed support 101 of the switchgear.

The engaging mechanism 213 of each first side member 212 can be manually operated by a user when the truck assembly is installed on the switchgear or removed from this latter.

The engaging mechanism 213 can also be realized according to various solutions, for example according to a snap-fit arrangement.

Preferably, the second truck unit 22 comprises a second intermediate member 221 and a pair of second side members 222 mechanically coupled one to another.

The second intermediate member 221 of the second truck unit 22 is also mechanically coupled to the first intermediate member 211 of the first truck unit 21.

The second side members 222 are arranged at opposite positions relative to the second intermediate member 221, along a fourth axis A₄ perpendicular to the motion axis A₀ and parallel to the motion plane P of the truck assembly (and parallel to the third axis A₃). According to the embodiments shown in the cited figures, the second intermediate member 221 has an open-box structure having a front wall and a rear wall, which are spaced one from another and oriented perpendicular to the motion axis A₀, a pair of opposite side walls, which are spaced one from another and oriented in parallel to the motion axis A₀, and a bottom wall perpendicular to the above-mentioned walls (reference is made to a normal installation position of the truck assembly).

The second intermediate member 221 further comprises a pair of support elements 220 oriented in parallel to the motion axis A₀, preferably arranged in proximity to the above-mentioned side walls. The support elements 220 are preferably formed by solid elongated profiles anchored to the above-mentioned bottom wall and support the support structure 3, when this latter is mounted on the second truck unit 22.

According to the embodiments shown in the cited figures, each second side member 222 has a solid profiled structure extending along an axis perpendicular to the fourth axis A₄ and parallel to the motion axis A₀. In practice, each second side member 222 forms a flank of the second truck unit 22, which extends in parallel to a corresponding side wall of the second intermediate member 212.

Preferably, one or more wheels 20 of the second truck unit 22 are mounted on each second side member 222.

Preferably, the second truck unit 2 comprises an actuating member 226 for actuating a shutter (not shown) of the switchgear, which is mounted on each second side member 222. In this way, the second truck unit 22 can cause the movement of a shutter of the switchgear, when it moves to a second truck position, which corresponds to a service position of the test apparatus as shown in figure 1. The primary contacts 110 of the switchgear can thus be accessed by the probes 4 of the test apparatus.

Each second side member 222 of the second truck unit 22 is reversibly movable relative to the second intermediate member 221 of the second truck unit 22, along the fourth axis A₄, in a plurality of positions that can be selectively adjusted by an operator.

In general terms, each second side member 222 is reversibly movable between a third position, at which it is in contact with the second intermediate member 221, and a selectively adjustable fourth position, at which the second side member 222 is spaced apart from the second intermediate member 221.

When it has to be placed in the above-mentioned third position, in which it is in contact with the second intermediate member 221, each second side member 222 can be directly fixed to the second intermediate member 221 at a side wall of this latter, for example through suitable screws or similar mechanical connection means of the removable type (figure 14).

According to some embodiments of the invention (figure 15), the second truck unit 22 comprises, for each second side member 222, one or more spacers 227 that are interposed between the second intermediate member 221 and the corresponding second side member 222 when said second side member is in the above-mentioned fourth position.

When a second side member 222 is in the fourth position spaced apart from the second intermediate member 221, each spacer 227 mechanically couples the second intermediate member 221 and the corresponding second side member 222 in such a way to form a single body.

Advantageously, each spacer 227 can be fixed to the second intermediate member 221 (at a side wall of this latter) and to the corresponding second side member 222 through suitable screws or similar mechanical connection means of the removable type.

Apparently, the position of the second side member 222 relative to the second intermediate member 221 can be selectively adjusted by selecting spacers 227 having a length corresponding to the selected position. Conveniently, the second truck unit 22 comprises a set of spacers 227 of different lengths, which can be made available to an operator to allow this latter to select a position of the second side member 222 relative to the second intermediate member 221.

In this way, the width of the second truck unit 22 can be adapted to the width of the switchgear compartment 102 in which the test apparatus is placed.

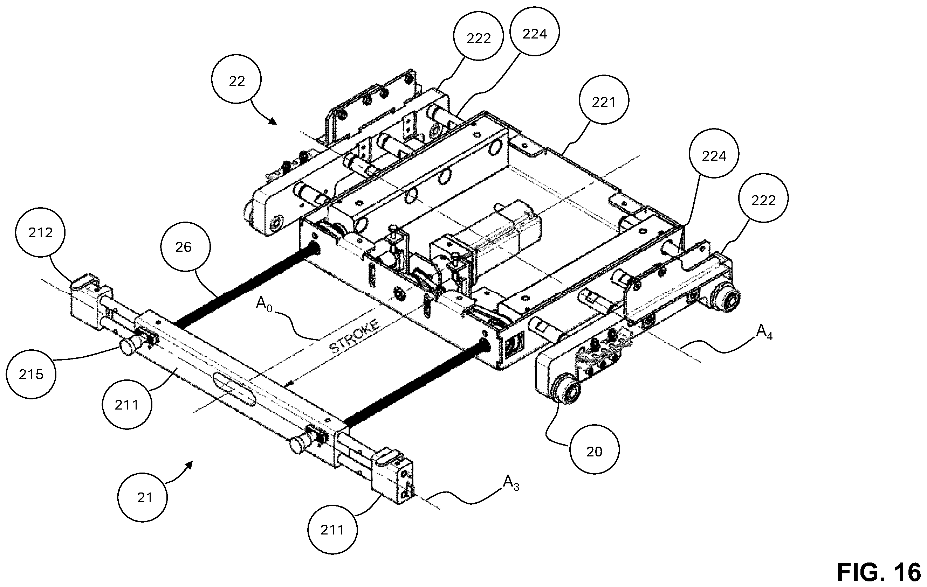

According to some embodiments of the invention (figure 16), the second truck unit 22 comprises, for each second side member 222, one or more second coupling rods 224 mechanically coupling the second side member 222 to the second intermediate member 221. Preferably, the second truck unit 22 comprises a plurality of second coupling rods 224 for each second side member 222.

The second coupling rods 224 are arranged in such a way to allow the support elements 220 of the second intermediate member 221 to support the opposite second side members 222 and, at the same time, to allow the movement of the second side members 222 relative to it.

In the embodiment shown in figure 16, each second coupling rod 224 has one end fixed to a corresponding second side member 222 and it is slidably inserted in a coupling cavity passing transversally through a corresponding support element 220.

In the embodiment shown in figure 16, the second truck unit 22 comprises, for each second side member 222, a locking mechanism (not shown) capable of mechanically interacting with a corresponding second coupling rod 224 to allow a selective adjustment of the position of the corresponding second side member 22 relative to the second intermediate member 221.

Each locking mechanism is reversibly actuatable between an unlocking position, at which it allows the corresponding second side member 222 to move relative to the second intermediate member 221, and a locking position, at which it prevents the corresponding second side member 222 to move relative to the second intermediate member 221.

Each second locking mechanism allows to move the corresponding second side member 222 in a plurality of positions relative to the second intermediate member 221, which can be selected by operating said locking mechanism.

In order to select a position of a second side member 222 relative to the second intermediate member 222, an operator can operate the locking mechanism from the locking condition to the unlocking locking condition and move the second side member 222 relative to the second intermediate member 221 until it is reached the desired position for said second side member. In this way, the width of the second truck unit 22 can be adapted to the width of the switchgear compartment 102 in which the truck assembly is placed.

Each locking mechanism can be realized according to various solutions, for example according to a snap-fit arrangement.

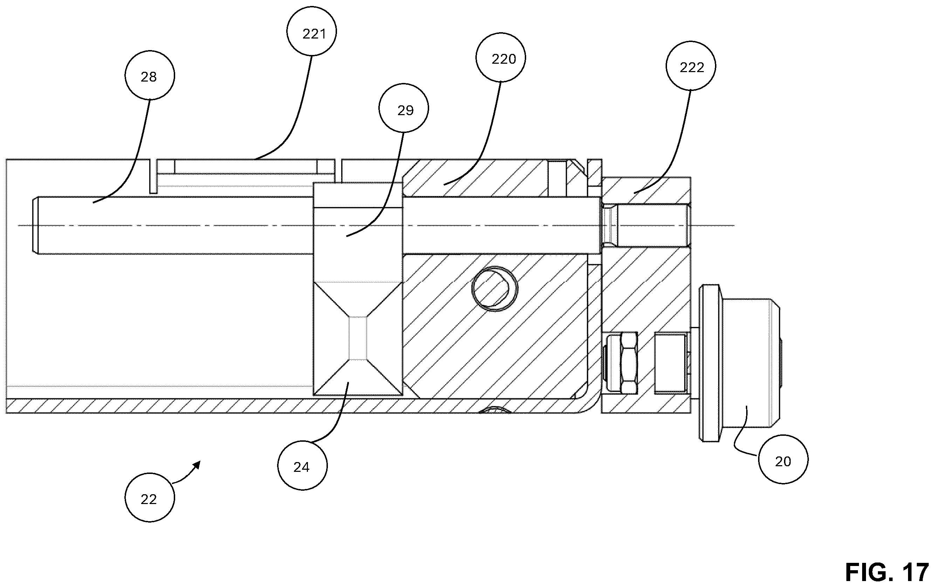

According to some embodiments of the invention (figure 17), the second truck unit 22 comprises, for each second side member 222, second driving means 24, 28, 29 for moving said second side member 222 relative to the second intermediate member 221.

The above-mentioned second driving means 24, 28, 29 can have a similar design compared to the first driving means 25, 26, 27 described above.

Preferably, the above-mentioned second driving means comprise an electric motor 24. Preferably, the electric motor 24 is capable of controlling selectively an angular position of the actuation shaft during the rotation and it may be, for example, a stepper electric motor or an electric motor equipped with an encoder.

Preferably, the above-mentioned second driving means comprise one or more second actuation rods 28 mechanically coupling the second side member 222 and the second intermediate member 221.

Preferably, each second actuation rod 28 is formed by a worm screw, which has an end inserted in a corresponding threaded cavity of the second side member 222 and passes through a cavity of a corresponding side wall and a corresponding threaded cavity that extends transversally a corresponding support element 220 of the second intermediate member 221.

Preferably, the above-mentioned second driving means comprise one or more second motion transmission mechanisms 29 (schematically shown in figure 17), each mechanically coupling the actuation shaft of the electric motor 24 with a corresponding worm screw 28.

According to the embodiments shown in the cited figures, the test apparatus 1 comprises a control unit 7, which is mounted on the first support member 31 of the support structure 3 in an opposite position relative to the second support member 32.

According to alternative embodiments, however, the control unit 7 can be a stand-alone device electrically connected to other components of the test apparatus.

The control unit 7 can be operatively coupled to the test probes 4 mounted onboard the support structure 3. As an example, the control unit 7 can communicate with possible cameras 413, 442 arranged on the test probes 41, 44 to drive said cameras and receive the images shot by these latter, communicate with possible sensors arranged onboard the test probes 42 to receive the detection signals provided by said sensors or be electrically connected to the test probes 43 to drive the injection of test currents through said test probes.

The control unit 7 is operatively coupled (for example through a suitable control bus) to the electric motor 25 (and possibly 24) to control this latter, according to the needs.

The control unit 7 comprises digital processing devices (not shown), for example one or more microprocessors, adapted to execute software instructions to carry out the functionalities requested for said control unit.

The control unit 7 comprises user interface means (for example a screen 71, control and selection buttons 72, signalling lights 73, and the like) to made information available to a user and to make a user able to interact with above-mentioned digital processing devices. Preferably, the control unit 7 comprises plug holes 74 for coupling with an external electronic device for injecting test currents through the test probes.

In general, the control unit 7 can be realized at industrial level according to well known solutions commonly adopted to realize electronic circuitry.

The test apparatus, according to the invention, allows achieving the intended aims and objects. The test apparatus, according to the invention, shows a high flexibility in use and it allows to carry out a variety of test functionalities in different operating conditions.

The test apparatus, according to the invention, can be easily adapted to the kind of test to be performed and to the dimensions of the switchgear compartment to be accessed for the execution of a test.

The test apparatus, according to the invention, can include different sets of test probes, which can be interchanged depending on the kind of tests to be carried out. Also, the height and the pitch of the test probes, as well as their position along the depth of the switchgear compartment where the test apparatus is placed, can be easily adapted depending on the position of the primary contacts of the switchgear, which are tested.

The height and the pitch of the test probes, and possibly also the width of the truck assembly (measured along an axis parallel to the motion plane and perpendicular to the motion axis of the truck assembly) can be adapted to the size of a switchgear compartment where the test apparatus has to be placed to carry out the test.

The test apparatus, according to the invention, include a highly modular structure that can be disassembled for transportation and storage purposes. On the other hand, such a modular structure can be easily mounted with the most appropriate configuration on the field through simple manual manoeuvres by an operator, eventually using a suitable kit of spacers.

The test apparatus, according to the invention, provides relevant advantages in terms of reduction of management times and costs of an electrical system. With a single test system, which is quite easy to store, transport on site and install on the field, it is possible to perform a variety of different tests on a switchgear, which would normally require the employment of multiple different test devices.

The test apparatus, according to the invention, has a compact and relatively simple construction, which is relatively easy to assembly manufacture at industrial level, at competitive costs compared to the traditional solutions of the state of the art.

## Claims

1. Test apparatus (1) for electrical switchgears (100) **characterised in that** it comprises:
- a truck assembly (2) having a plurality of wheels (20) that can roll on a motion plane (P) along a motion axis (A₀);
- a support structure (3) including a first support member (31) structured to be mounted on said truck assembly (2), a second support member (32) structured to be mounted on said first support member (31) and one or more third support members (33a, 33b) structured to be mounted on said second support member;
- one or more test probes (4) structured to be mounted on said third support members (33a, 33b);
wherein said second support member (32) is movable relative to said first support member (31), along a first axis (A₁) perpendicular to the motion plane (P) of said truck assembly, when said second support member is mounted on said first support member, said second support member (32) being reversibly movable, along said first axis (A₁), in a plurality of selectively adjustable positions relative to said first support member.

2. Test apparatus, according to claim 1, **characterised in that** said one or more third support members comprises one or more third support members (33a) movable relative to said second support member (32), along a second axis (A₂) perpendicular to said first axis (A₁) and said motion axis (A₀), when said third support members are mounted on said second support member, each movable third support member (33a) being reversibly movable, along said second axis (A₂), in a plurality of selectively adjustable positions relative to said second support member (32).

3. Test apparatus, according to claim 2, **characterised in that** said one or more third support members comprises one or more fixed third support members (33b) structured to be mounted on said second support member (32) in corresponding one or more fixed positions, along said second axis (A₂).

4. Test apparatus, according to one of the previous claims, **characterised in that** it comprises multiple sets of test probes (41, 42, 43, 44) structured to be mounted on said third support members (33), each set of test probes being interchangeable with another set of test probes.

5. Test apparatus, according to claim 4, **characterised in that** said multiple sets of probes (4) include two or more among: a first set of test probes (41) for grounding primary contacts (110) of a switchgear (100), a second set of test probes (42) for injecting a current through primary contacts of a switchgear, a third set of test probes (43) for detecting a voltage at primary contacts of a switchgear and a fourth set of test probes (44) for visual inspection of primary contacts of a switchgear.

6. Test apparatus, according to one of the previous claims, **characterised in that** said truck assembly (2) comprises comprising a first truck unit (21) and a second truck unit (22) mechanically coupled one to another, said first truck unit (21) being structured to engage a fixed support (101) of a switchgear (110), said second truck unit comprising a plurality of wheels (20) and being reversibly movable relative to said first truck unit (2) on said motion plane (P) along said motion axis (A₀), said second truck unit being structured to carry said support structure (3) and test probes (4).

7. Test apparatus, according to claim 6, **characterised in that** said first truck unit (21) comprises a first intermediate member (211) and a pair of first side members (212) mechanically coupled to said first intermediate member, said first side members being arranged at opposite positions relative to said first intermediate member (211), along a third axis (A₃) parallel to said motion plane (P) and perpendicular to said motion axis (A₀), each first side member (212) being reversibly movable, along said third axis (A₃), in a plurality of selectively adjustable positions relative to said first intermediate member (211).

8. Test apparatus, according to one of the claims from 6 to 7, **characterised in that** said second truck unit (22) comprises a second intermediate member (221) mechanically coupled to said first intermediate member (211) and a pair of second side members (222) mechanically coupled to said second intermediate member, said second side members being arranged at opposite positions relative to said second intermediate member (221), along a fourth axis (A₄) parallel to said motion plane (P) and perpendicular to said motion axis (A₀), each second side member (222) being reversibly movable, along said fourth axis (A₄), in a plurality of selectively adjustable positions relative to said second intermediate member (221).

9. Test apparatus, according to one of the claims from 6 to 8, **characterised in that** it comprises driving means for moving said second truck unit (22) relative to said first truck unit (21), said driving means comprising at least an electric motor (25).

10. Test apparatus, according to one of the claims from 6 to 9, **characterised in that** said second truck unit (22) comprises an actuating member (226) for actuating a shutter of a switchgear mounted on each second side member (221) of said second truck unit.

11. Test apparatus, according to one of the previous claims, **characterised in that** it comprises a control module (7) mounted on said first support member (31).
